(19) Europäisches Patentamt
European Patent Office
Office européen des brevets

(11) EP 4 613 804 A1

(12) **EUROPEAN PATENT APPLICATION**
published in accordance with Art. 153(4) EPC

(43) Date of publication:
10.09.2025 Bulletin 2025/37

(21) Application number: 23897725.0

(22) Date of filing: 27.11.2023

(51) International Patent Classification (IPC):
C08L 11/02 (2006.01)       C08F 36/18 (2006.01)
C08K 5/00 (2006.01)        C09J 111/02 (2006.01)

(52) Cooperative Patent Classification (CPC):
C08F 36/18; C08K 5/00; C08L 11/02; C09J 111/02

(86) International application number:
PCT/JP2023/042359

(87) International publication number:
WO 2024/117077 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.11.2022  JP 2022189171
06.01.2023  JP 2023001290

(71) Applicant: Denka Company Limited
Tokyo 103-8338 (JP)

(72) Inventors:
• SOTOKAWA, Shota
Tokyo 103-8338 (JP)
• ANDO, Ryotaro
Tokyo 103-8338 (JP)
• NAKAMURA, Takumi
Tokyo 103-8338 (JP)

(74) Representative: Gulde & Partner
Patent- und Rechtsanwaltskanzlei mbB
Berliner Freiheit 2
10785 Berlin (DE)

(54) **CHLOROPRENE-BASED POLYMER LATEX COMPOSITION AND ADHESIVE AGENT COMPOSITION**

(57)     Provided are a chloroprene-based polymer latex composition capable of yielding an adhesive composition having excellent initial adhesive strength and freeze stability, and an adhesive composition comprising the same.

According to the present invention, there is provided a chloroprene-based polymer latex composition comprising a chloroprene-based polymer and a nonionic emulsifier, wherein the chloroprene-based polymer latex composition comprises 0.005 to 0.40 parts by mass of the nonionic emulsifier with respect to 100 parts by mass of the chloroprene-based polymer, and the chloroprene-based polymer has an average particle size of 80 to 160 nm and a toluene insoluble content of 30% by mass or less.

EP 4 613 804 A1

**Description**

TECHNICAL FIELD

The present invention relates to a chloroprene-based polymer latex composition and an adhesive composition.

BACKGROUND ART

Adhesives comprising a chloroprene-based polymer are used in solvent-based contact adhesives, graft adhesives, and the like because high adhesive strength can be obtained with low pressure application to various adherends. However, regulations regarding solvent-based adhesives are becoming stricter year by year due to their flammability and toxicity. Therefore, aqueous adhesives using chloroprene-based polymer latexes have been developed.
For example, Patent Literature 1 discloses a chloroprene-based polymer latex characterized by comprising an emulsifier which is an alkali metal salt of a carboxylic acid, and 0.1 to 0.5 parts by weight of a polyoxyalkylene derivative represented by a specific formula within 100 parts by weight of the chloroprene-based polymer latex, as well as an adhesive composition comprising the chloroprene-based polymer latex.

CITATION LIST

PATENT LITERATURE

Patent Literature 1 JP 2016-160295 A

SUMMARY OF INVENTION

TECHNICAL PROBLEM

However, with conventional adhesives comprising chloroprene-based polymer latex compositions, particularly aqueous adhesives, it has been difficult to achieve both initial adhesive strength and freeze stability. The present invention has been made in view of such circumstances, and an object thereof is to provide a chloroprene-based polymer latex composition capable of yielding an adhesive composition having excellent initial adhesive strength and freeze stability, and an adhesive composition comprising the chloroprene-based polymer latex composition.

SOLUTION TO PROBLEM

According to the present invention, there is provided a chloroprene-based polymer latex composition comprising a chloroprene-based polymer and a nonionic emulsifier, wherein the chloroprene-based polymer latex composition comprises 0.005 to 0.40 parts by mass of the nonionic emulsifier with respect to 100 parts by mass of the chloroprene-based polymer, and the chloroprene-based polymer has an average particle size of 80 to 160 nm and a toluene insoluble content of 30% by mass or less.
The present inventors conducted diligent investigations and found that in a chloroprene-based polymer latex composition comprising a chloroprene-based polymer and a nonionic emulsifier, by setting the amount of the nonionic emulsifier, the average particle size and the toluene insoluble content of the chloroprene-based polymer to be within specific numerical ranges, a chloroprene-based polymer latex composition having excellent initial adhesive strength and freeze stability is obtained, thereby completing the present invention.
Hereinafter, various embodiments of the present invention are illustrated. The embodiments shown below can be combined with each other.

[1] A chloroprene-based polymer latex composition comprising a chloroprene-based polymer and a nonionic emulsifier, wherein:

the chloroprene-based polymer latex composition comprises 0.005 to 0.40 parts by mass of the nonionic emulsifier with respect to 100 parts by mass of the chloroprene-based polymer; and
the chloroprene-based polymer has an average particle size of 80 to 160 nm and a toluene insoluble content of 30% by mass or less.

[2] The chloroprene-based polymer latex composition of [1], wherein the nonionic emulsifier comprises at least one selected from a group consisting of a polyoxyalkylene phenyl ether-based emulsifier, a polyoxyalkylene alkyl ether-based emulsifier, a polyoxyethylene sorbitan fatty acid ester-based emulsifier, a polyoxyethylene sorbitol fatty acid ester-based emulsifier, a sorbitan fatty acid ester-based emulsifier, a glycerin fatty acid ester-based emulsifier, a polyoxyethylene alkylamine-based emulsifier, a polyoxyethylene fatty acid ester-based emulsifier, and an alkyl alkanolamide-based emulsifier.

[3] An adhesive composition comprising the chloroprene-based polymer latex composition of [1] or [2].

[4] The adhesive composition of [3], comprising a pH adjuster.

[5] The adhesive composition of [3] or [4], wherein the adhesive composition is for a polyurethane foam.

EFFECTS OF INVENTION

According to the chloroprene-based polymer latex composition of the present invention, an adhesive composition having excellent initial adhesive strength and freeze stability can be obtained. The adhesive composition comprising the chloroprene-based polymer latex composition according to the present invention has excellent initial adhesive strength, and can exhibit excellent initial adhesive strength even if the drying time of the adhesive layer is shortened or eliminated when the adhesive is used. Furthermore, excellent initial adhesive strength can be exhibited even in a wet state when the drying temperature is room temperature. That is, in the bonding process using the adhesive composition comprising the chloroprene-based polymer latex composition according to the present invention, long-time drying or heat drying, which was conventionally necessary, is not essential, allowing the work process to be shortened, energy and costs to be reduced, and equipment to be simplified. Furthermore, the chloroprene-based polymer latex composition according to the present invention and the adhesive composition comprising the chloroprene-based polymer latex composition have excellent freeze stability, and coagulation of the composition is unlikely to occur even in harsh environments with low temperatures and/or after storage in low-temperature environments. The adhesive composition comprising the chloroprene-based polymer latex composition according to the present invention can be suitably used, for example, as a spray-type adhesive used for bonding polyolefin resins or foams, particularly polyurethane foam.

DESCRIPTION OF EMBODIMENTS

Hereinafter, the present invention will be described in detail by illustrating embodiments of the present invention. The present invention is not limited in any way by these descriptions. Each feature of the embodiments of the present invention shown below can be combined with each other. Furthermore, an invention can be established independently for each feature.

1. Chloroprene-based Polymer Latex Composition

The chloroprene-based polymer latex composition according to the present invention comprises a chloroprene-based polymer and a nonionic emulsifier. The chloroprene-based polymer latex composition according to the present invention comprises 0.005 to 0.40 parts by mass of the nonionic emulsifier with respect to 100 parts by mass of the chloroprene-based polymer. Further, the chloroprene-based polymer has an average particle size of 80 to 160 nm and a toluene insoluble content of 30% by mass or less.

1.1 Chloroprene-based Polymer and Chloroprene-based Polymer Latex

In the present invention, a chloroprene-based polymer latex means a latex comprising a chloroprene-based polymer. Further, the chloroprene-based polymer means a polymer comprising a monomer unit derived from 2-chloro-1,3-butadiene (hereinafter also referred to as a chloroprene monomer), and includes a homopolymer of the chloroprene monomer, and a copolymer comprising a monomer unit derived from the chloroprene monomer and another monomer copolymerizable with the chloroprene monomer. Examples of the other monomer include 1-chloro-1,3-butadiene, 2,3-dichloro-1,3-butadiene, butadiene, isoprene, styrene, acrylonitrile, acrylic acid and its esters, methacrylic acid and its esters, and the like.

The chloroprene-based polymer latex composition according to one embodiment of the present invention preferably comprises 60 to 100% by mass of the chloroprene monomer units, when the chloroprene-based polymer contained in the chloroprene-based polymer latex composition is taken as 100% by mass. The content rate of the chloroprene monomer units is, for example, 60, 65, 70, 75, 80, 85, 90, 95, 99, or 100% by mass, and may be within a range between any two of the numerical values exemplified here.

The chloroprene-based polymer latex composition according to one embodiment of the present invention may comprise one type of chloroprene-based polymer, or may comprise two or more types of chloroprene-based polymers.

The chloroprene-based polymer latex composition according to one embodiment of the present invention preferably comprises a homopolymer of the chloroprene monomer. The chloroprene-based polymer latex composition according to one embodiment of the present invention preferably comprises 60 to 100% by mass, in terms of solid content, of the homopolymer of the chloroprene monomer, with respect to 100% by mass of the solid content of the chloroprene-based polymer latex contained in the chloroprene-based polymer latex composition. The content rate of the homopolymer of the chloroprene monomer is, for example, 60, 65, 70, 75, 80, 85, 90, 95, or 100% by mass, and may be within a range between any two of the numerical values exemplified here. By comprising the chloroprene-based polymer, the chloroprene-based polymer latex composition according to one embodiment of the present invention can improve the contact properties, heat-resistant adhesion, and initial adhesive strength of an adhesive composition comprising the chloroprene-based polymer latex composition.

<Toluene Insoluble Content>

The chloroprene-based polymer according to the present invention has a toluene insoluble content of 30% by mass or less. In the present invention, the toluene insoluble content refers to the content rate of the gel fraction, among the chloroprene-based polymer, that is insoluble in a toluene solvent. Further, sol refers to the component soluble in the toluene solvent. The chloroprene-based polymer according to the present invention has a toluene insoluble content (gel fraction) of 30% by mass or less and contains abundant sol with excellent molecular mobility. Therefore, it is presumed that fusion of the molecular chains of the chloroprene-based polymer occurs rapidly at the adhesive interface, adhesive strength develops instantaneously, and thus excellent initial adhesive strength can be expressed.
The toluene insoluble content is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30% by mass, and may be within a range between any two of the numerical values exemplified here.
The toluene insoluble content can be determined by the following formula, where A g is the mass of the chloroprene-based polymer obtained by freeze-drying the chloroprene-based polymer latex, and B g is the mass of the gel fraction (insoluble fraction) separated from a mixture obtained by dissolving the freeze-dried latex in toluene. Specifically, it can be determined by the method described in the Examples.

$$\text{Toluene insoluble content (gel fraction)} = B/A \times 100 \ (\%)$$

The toluene insoluble content can be controlled by adjusting the polymerization conditions during the production of the chloroprene-based polymer latex, for example, manufacturing conditions such as the type and amount of a polymerization initiator and a chain transfer agent, as well as polymerization temperature, polymerization time, polymerization rate, and the like.
When the chloroprene-based polymer latex composition comprises two or more types of chloroprene-based polymers, it is preferable that the toluene insoluble content of a mixture obtained by mixing the two or more types of chloroprene-based polymers is within the above numerical range.

<Average Particle Size>

The chloroprene-based polymer latex according to one embodiment of the present invention has an average particle size of 80 to 160 nm. The average particle size is, for example, 80, 85, 90, 95, 100, 105, 110, 115, 120, 125, 130, 135, 140, 145, 150, 155, or 160 nm, and may be within a range between any two of the numerical values exemplified here.
The average particle size of the chloroprene-based polymer latex can be a value determined by the cumulant method from an autocorrelation function determined by the photon correlation method in the dynamic light scattering method. Specifically, it can be determined by the method described in the Examples. The average particle size of the chloroprene-based polymer latex can be controlled by adjusting the polymerization conditions during the production of the chloroprene-based polymer latex, for example, manufacturing conditions such as the type and amount of an emulsifier and the like, polymerization temperature, polymerization time, polymerization rate, and the like. As one example, the average particle size of the chloroprene-based polymer latex can be controlled by adjusting the polymerization time according to the type of emulsifier (for example, the amount of conjugated resin acid in the emulsifier).

1.2 Nonionic Emulsifier

The chloroprene-based polymer latex composition according to the present invention comprises 0.005 to 0.40 parts by mass of a nonionic emulsifier with respect to 100 parts by mass of the chloroprene-based polymer. The content of the nonionic emulsifier is, for example, 0.005, 0.007, 0.009, 0.01, 0.02, 0.03, 0.05, 0.07, 0.10, 0.15, 0.20, 0.25, 0.30, 0.35, or 0.40 parts by mass, and may be within a range between any two of the numerical values exemplified here. The chloroprene-based polymer latex composition according to the present invention comprises a chloroprene-based polymer having a specific toluene insoluble content and average particle size, and by defining the content of the nonionic emulsifier, it becomes a chloroprene-based polymer latex composition capable of yielding an adhesive composition having excellent initial adhesive strength and freeze stability. The content of the nonionic emulsifier with respect to 100 parts by mass of chloroprene-based polymer can be determined by the method described in the Examples.

It is preferable that the nonionic emulsifier comprises at least one selected from a group consisting of a polyoxyalkylene phenyl ether-based emulsifier, a polyoxyalkylene alkyl ether-based emulsifier, a polyoxyethylene sorbitan fatty acid ester-based emulsifier, a polyoxyethylene sorbitol fatty acid ester-based emulsifier, a sorbitan fatty acid ester-based emulsifier, a glycerin fatty acid ester-based emulsifier, a polyoxyethylene alkylamine-based emulsifier, a polyoxyethylene fatty acid ester-based emulsifier, and an alkyl alkanolamide-based emulsifier. It is more preferable that the nonionic emulsifier comprises at least one selected from the group consisting of a polyoxyalkylene phenyl ether-based emulsifier and a polyoxyalkylene alkyl ether-based emulsifier, even more preferably comprises at least one selected from the group consisting of a polyoxyethylene phenyl ether-based emulsifier and a polyoxyethylene alkyl ether-based emulsifier, and still more preferably comprises a polyoxyethylene styryl phenyl ether-based emulsifier. The nonionic emulsifier can be one that does not contain the rosin acid (or its alkali metal salt) described later.

The polyoxyalkylene alkyl ether-based emulsifier and the polyoxyalkylene phenyl ether-based emulsifier can be represented by the general formula $RO(EO)_n(PO)_mH$. In the formula, R is a linear or branched alkyl group having 8 to 30 carbon atoms, or an unsubstituted or substituted phenyl group, preferably a linear or branched alkyl group having 8 to 12 carbon atoms, or an unsubstituted or substituted phenyl group, and more preferably a styrenated phenyl group in which a hydrogen atom of the phenyl group is substituted with a styryl group $C_6H_5\text{-}CH(CH_3)\text{-}$. Further, EO represents an ethylene oxide group, PO represents an alkylene oxide group having 3 or more carbon atoms such as a propylene oxide group or a butylene oxide group, and their arrangement may be block or random. Further, n and m are each independently an integer from 0 to 100, and preferably independently an integer from 0 to 50. Note that n + m > 0.

1.3 Rosin Acid and Its Alkali Metal Salt

The chloroprene-based polymer latex composition according to the present invention can comprise an emulsifier other than the nonionic emulsifier. Examples of the emulsifier other than the nonionic emulsifier include anionic emulsifiers and cationic emulsifiers, and examples of anionic emulsifiers include rosin acid and its alkali metal salt. The chloroprene-based polymer latex composition according to the present invention can comprise 3.0 to 7.0 parts by mass of rosin acid and its alkali metal salt with respect to 100 parts by mass of the chloroprene-based polymer. The content of the rosin acid and its alkali metal salt is, for example, 3.0, 3.5, 4.0, 4.5, 5.0, 5.5, 6.0, 6.5, or 7.0 parts by mass, and may be within a range between any two of the numerical values exemplified here.

The chloroprene-based polymer latex composition according to one embodiment of the present invention can comprise rosin acid and its alkali metal salt, and the rosin acid and its alkali metal salt can comprise a conjugated resin acid.

A conjugated resin acid means a resin acid (rosin acid) having a conjugated double bond. Examples of the conjugated resin acid include abietic acid, neoabietic acid, palustric acid, and levopimaric acid. It is preferable that the conjugated resin acid comprises at least one selected from a group consisting of abietic acid and palustric acid, and more preferably comprises abietic acid. Further, examples of the non-conjugated resin acid include dehydroabietic acid, pimaric acid, isopimaric acid, dihydroabietic acid, dihydropimaric acid, secodehydroabietic acid, deisopropyldehydroabietic acid, and demethyldehydroabietic acid.

It is known that rosin acid or its alkali metal salt is used as an emulsifier in the emulsion polymerization of a chloroprene-based polymer. However, when using a rosin acid or its alkali metal salt containing a conjugated resin acid having a conjugated double bond as the rosin acid or its alkali metal salt, polymerization was sometimes inhibited. Further, the stability of the resulting chloroprene-based polymer latex was sometimes insufficient, or the adhesive properties were sometimes insufficient. From such viewpoints, disproportionated rosin acid or its alkali metal salt, particularly disproportionated rosin alkali metal salt, is often used as an emulsifier in the emulsion polymerization of a chloroprene-based polymer (particularly, in the emulsion polymerization of a chloroprene-based polymer for adhesive applications).

The chloroprene-based polymer latex composition according to the present invention can comprise 0 to 3.5 parts by mass of a conjugated resin acid with respect to 100 parts by mass of the chloroprene-based polymer. The content of the conjugated resin acid with respect to 100 parts by mass of the chloroprene-based polymer is, for example, 0, 0.1, 0.2, 0.3, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, or 3.5 parts by mass, and may be within a range between any two of the numerical values exemplified here. The chloroprene-based polymer latex composition according to the present invention may not contain a conjugated resin acid.

The chloroprene-based polymer latex composition according to one embodiment of the present invention may comprise 0.5 to 6.0 parts by mass of a non-conjugated resin acid with respect to 100 parts by mass of the chloroprene- based polymer. The content of the non-conjugated resin acid with respect to 100 parts by mass of the chloroprene-based polymer is, for example, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, or 6.0 parts by mass, and may be within a range between any two of the numerical values exemplified here.

In the chloroprene-based polymer latex composition according to one embodiment of the present invention, the content rate of the conjugated resin acid, when the total content of the conjugated resin acid and the non-conjugated resin acid in the chloroprene-based polymer latex composition is taken as 100% by mass, is, for example, 0, 5, 10, 15, 20, 25, 30, 35, 40, 45, 50, 55, 60, 65, 70, 75, 80, 90, or 100% by mass, and may be within a range between any two of the numerical values exemplified here.

The conjugated resin acid contained in the chloroprene-based polymer latex composition includes conjugated resin acids existing in the form of conjugated resin acid salts. In the polymerization of the chloroprene-based polymer, rosin acid (including conjugated resin acid and non-conjugated resin acid), conjugated resin acid, and non-conjugated resin acid can also be added in the form of rosin acid salts, conjugated resin acid salts, and non-conjugated resin acid salts. Further, the emulsion polymerization method using rosin acid or the like is often carried out under strongly alkaline conditions, and in a strongly alkaline chloroprene-based polymer latex, rosin acid, conjugated resin acid, and non-conjugated resin acid often exist in a salt state. Examples of the salt include alkali metal salts, such as potassium salts, sodium salts, and the like. Examples of compounds forming salts with rosin acid, conjugated resin acid, and non-conjugated resin acid include potassium hydroxide, sodium hydroxide, potassium carbonate, sodium carbonate, potassium bicarbonate, sodium bicarbonate, and the like. Conjugated resin acid includes potassium abietate, potassium neoabietate, potassium palustrate, and potassium levopimarate, as well as sodium abietate, sodium neoabietate, sodium palustrate, and sodium levopimarate.

The content of the conjugated resin acid can be calculated by freeze-drying the rosin acid, its alkali metal salt or chloroprene-based polymer latex to obtain the solid content, extracting from the solid content with an ethanol and toluene azeotropic mixture (ETA solution) specified in JIS K 6229, subjecting the result to hydrochloric acid treatment to obtain an extract, performing gas chromatography on the extract, analyzing by gas chromatography to obtain measurement results, determining the peak area of the conjugated resin acid component and the peak area of the non-conjugated resin acid component from the measurement results, and calculating the content of the conjugated resin acid component and the non-conjugated resin acid component relative to the total peak area. Specifically, it can be calculated by the method described in the Examples.

The chloroprene-based polymer latex composition according to one embodiment of the present invention can comprise rosin acid and its alkali metal salt containing a conjugated resin acid, and the content rate of the conjugated resin acid in the rosin acid and its alkali metal salt is, for example, 0, 5, 10, 15, 20, 25, 30, 35, 40, 45, 50, 55, 60, 65, 70, 75, 80, 90, or 100% by mass, and may be within a range between any two of the numerical values exemplified here. The chloroprene-based polymer latex composition according to one embodiment of the present invention may not contain rosin acid and its alkali metal salt containing a conjugated resin acid.

The chloroprene-based polymer latex composition according to one embodiment of the present invention may contain an emulsifier or dispersant other than rosin acid, its alkali metal salt and the nonionic emulsifier. Other emulsifiers and dispersants will be described later in the explanation of the method for producing the chloroprene-based polymer latex.

1.4 Method for Producing Chloroprene-based Polymer Latex

The method for producing the chloroprene-based polymer latex according to the present invention is not particularly limited, but it can be produced by the following method. The method for producing the chloroprene-based polymer latex according to one embodiment of the present invention can include an emulsion polymerization step. In the emulsion polymerization step, raw material monomers comprising a chloroprene monomer, or a chloroprene monomer and another monomer copolymerizable therewith, are subjected to emulsion polymerization using an emulsifier, a dispersant, a polymerization initiator, a chain transfer agent, a reducing agent, and the like as appropriate. When a target polymerization rate is reached, a polymerization terminator is added to obtain the chloroprene-based polymer latex. Further, additives such as a nonionic emulsifier can be added as necessary to the chloroprene-based polymer latex thus obtained. Furthermore, unreacted monomers may be removed by a concentration method such as vacuum distillation, and the like.

(Emulsifier)

It is preferable that the emulsifier comprises rosin acid, its alkali metal salt.

As mentioned above, generally, the disproportionated rosin acid used in the emulsion polymerization of a chloroprene-based polymer is obtained by subjecting raw rosin acid to a disproportionation treatment, and the disproportionated rosin acid has an extremely low content of conjugated resin acid or contains no conjugated resin acid. According to one embodiment of the present invention, a rosin acid that has not undergone disproportionation treatment, for example, a raw rosin acid such as tall rosin, gum rosin, or wood rosin, or a rosin acid that has not undergone treatment to completely modify the conjugated resin acid into non-conjugated resin acid (including cases where a part is modified into non-conjugated resin acid and a part remains as conjugated resin acid) can also be used as the emulsifier.

It is preferable that the amount of rosin acid and its alkali metal salt added is adjusted to such that the contents of rosin acid, conjugated resin acid, and non-conjugated resin acid in the chloroprene-based polymer latex composition fall within the numerical ranges described above. The amount of rosin acid and its alkali metal salt added can be 3.0 to 7.0 parts by mass with respect to 100 parts by mass of all monomers used. The amount of rosin acid and its alkali metal salt added is, for example, 3.0, 3.5, 4.0, 4.5, 5.0, 5.5, 6.0, 6.5, or 7.0 parts by mass, and may be within a range between any two of the numerical values exemplified here.

The emulsifier can comprise rosin acid and its alkali metal salt containing a conjugated resin acid, and the content rate of the conjugated resin acid in the rosin acid and its alkali metal salt is, for example, 0, 5, 10, 15, 20, 25, 30, 35, 40, 45, 50, 55, 60, 65, 70, 75, 80, 90, or 100% by mass, and may be within a range between any two of the numerical values exemplified here. The rosin acid and its alkali metal salt according to one embodiment of the present invention may not contain rosin acid and its alkali metal salt containing a conjugated resin acid.

The emulsifier used in the emulsion polymerization step can also comprise a rosin acid including disproportionated rosin acid and/or its alkali metal salt. When the emulsifier comprises raw rosin acid and/or its salt, and disproportionated rosin acid and/or its salt, the emulsifier can comprise, for example, 0, 5, 10, 15, 20, 25, 30, 35, 40, 45, 50, 55, 60, 65, 70, 75, 80, 85, 90, 95, or 100 parts by mass of the raw rosin acid and/or its salt with respect to 100 parts by mass of the total rosin acid and/or its alkali metal salt, and may be within a range between any two of the numerical values exemplified here.

The emulsifier can also include a emulsifier or dispersant other than rosin acid and/or its alkali metal salt, and as the emulsifier or dispersant other than rosin acid and/or its alkali metal salt, cationic, anionic, or nonionic emulsifiers or dispersants can be used. According to one embodiment of the present invention, the emulsifier used in the emulsion polymerization step can comprise rosin acid and/or its alkali metal salt, and an anionic emulsifier or dispersant. As the anionic emulsifier or dispersant, it is preferable to use sulfate-based or sulfonate-based anionic emulsifiers or dispersants in combination from the viewpoint of stabilizing the chloroprene-based polymer latex when a pH adjuster is added. Specific examples include alkyl sulfonates having 8 to 20 carbon atoms, alkyl aryl sulfates, condensates of sodium naphthalene sulfonate and formaldehyde, and sodium alkyldiphenylether disulfonate. The amount of the anionic emulsifier or dispersant added can be 0.05 to 5 parts by mass with respect to 100 parts by mass of all monomers used. The amount of the anionic emulsifier or dispersant added is, for example, 0.05, 0.1, 0.2, 0.3, 0.5, 1.0, 1.5, 2.0, 2.5, 3.0, 3.5, 4.0, 4.5, or 5.0 parts by mass with respect to 100 parts by mass of all monomers used, and may be within a range between any two of the numerical values exemplified here.

(Chain Transfer Agent)

In the emulsion polymerization step, it is preferable to add a chain transfer agent to adjust the molecular weight, molecular weight distribution, and toluene insoluble content of the chloroprene-based polymer. The chain transfer agent may be added at the beginning of polymerization or during polymerization. Preferred chain transfer agents are long-chain alkyl mercaptans such as n-dodecyl mercaptan and t-dodecyl mercaptan, and dialkyl xanthogen disulfides such as diisopropyl xanthogen disulfide and diethyl xanthogen disulfide. Long-chain alkyl mercaptans are more preferred because they make it easier to control the molecular weight and toluene insoluble content. The chain transfer agent can be used alone or in combination of two or more types. The total amount of chain transfer agent added during emulsion polymerization is preferably 0.005 to 0.12 parts by mass with respect to 100 parts by mass of the chloroprene monomer and the monomer copolymerizable with the chloroprene monomer. The total amount of chain transfer agent added is, for example, 0.005, 0.01, 0.05, 0.10, 0.11, or 0.12 parts by mass, and may be within a range between any two of the numerical values exemplified here.

(Initiator)

As the polymerization initiator, ordinary radical polymerization initiators can be used. Specifically, organic or inorganic peroxides such as benzoyl peroxide, potassium persulfate, and ammonium persulfate, and azo compounds such as azobisisobutyronitrile are used. Further, cocatalysts such as anthraquinone sulfonate salts, potassium sulfite, sodium sulfite, and the like may be used in combination as appropriate.

(Potassium Hydroxide and Sodium Hydroxide)

In the emulsion polymerization step, sodium hydroxide and/or potassium hydroxide can be used. Sodium hydroxide and potassium hydroxide can be used in an amount of 0.01 to 2.0 parts by mass with respect to 100 parts by mass of all monomers used.

(Reducing Agent)

In the emulsion polymerization step, a reducing agent can be added. Examples of the reducing agent include potassium pyrosulfite, potassium sulfite, potassium bisulfite, potassium phosphate, potassium hydrogen phosphate, sodium bisulfite, sodium sulfate, thiourea dioxide, and the like. The amount of the reducing agent added can be 0.005 to 3.0 parts by mass with respect to 100 parts by mass of the raw material monomers used in the polymerization step.

(Polymerization Conversion Rate)

The polymerization conversion rate of the raw material monomers during emulsion polymerization of the chloroprene-based polymer or the like is preferably 50% by mass or more and less than 90% by mass, and more preferably 60 to 85% by mass. By setting the polymerization conversion rate to 50% by mass or more, it is possible to prevent a decrease in the solid content concentration of the chloroprene-based polymer latex, an increase in the load of the drying step after adhesive application, and difficulty in uniformizing the adhesive layer. Further, problems such as odor due to residual chloroprene monomer and deterioration of tackiness and adhesive strength can be prevented. By setting the polymerization conversion rate to less than 90% by mass, an increase in branching in the chloroprene-based polymer and an increase in molecular weight distribution due to an increase in molecular weight can be prevented, and deterioration of initial adhesive strength can be prevented. The polymerization conversion rate (% by mass) is determined by the following formula.

$$[(\text{Total mass of polymer} / \text{Total mass of monomers}) \times 100].$$

Hereinafter, the polymerization conversion rate may also be simply referred to as the polymerization rate.

(Polymerization Temperature)

The chloroprene-based polymer can be polymerized, for example, in the range of 0 to 45°C, and it is particularly preferable to polymerize at a low temperature of 5 to 20°C. It is known that the chloroprene-based polymer usually comprises 85% or more of trans-1,4 bonds, and its molecular structure is relatively rich in regularity. Because of this high regularity in the molecular structure, the chloroprene-based polymer has properties as a typical crystalline polymer. Particularly by polymerizing at a low temperature of 5 to 20°C, the ratio of trans-1,4 bonds within the polychloroprene molecule is further increased, the crystallization rate can be further enhanced, and more sufficient adhesive strength is achieved when made into an aqueous adhesive.

(Polymerization Terminator)

Generally, in the production of a chloroprene-based polymer, for the purpose of obtaining a polymer with a desired molecular weight and distribution, a polymerization terminator is added when a predetermined polymerization rate is reached to stop the reaction. The polymerization terminator is not particularly limited, but phenothiazine, p-t-butylcatechol, hydroquinone, hydroquinone monomethyl ether, diethylhydroxylamine, and the like can be used.

(Nonionic Emulsifier)

The method for producing the chloroprene-based polymer latex according to one embodiment of the present invention can include a step of adding an emulsifier after stopping the polymerization. Examples of the emulsifier include a nonionic emulsifier. The types of nonionic emulsifiers are as described above.

The amount of nonionic emulsifier added can be 0.005 to 0.40 parts by mass with respect to 100 parts by mass of the chloroprene-based polymer. The amount of nonionic emulsifier added is, for example, 0.005, 0.007, 0.009, 0.01, 0.02, 0.03, 0.05, 0.07, 0.10, 0.15, 0.20, 0.25, 0.30, 0.35, or 0.40 parts by mass, and may be within a range between any two of the numerical values exemplified here. The emulsifier may be added before adjusting the solid content concentration, or may be added after adjusting the solid content concentration.

(Solid Content Concentration)

The method for producing the chloroprene-based polymer latex according to one embodiment of the present invention can include a step of removing unreacted monomers by a concentration method such as vacuum distillation. The solid content concentration of the chloroprene-based polymer latex is not particularly limited, but can be adjusted to 40 to 65% by mass. The solid content concentration of the chloroprene-based polymer latex can be controlled by adjusting the blending ratio including solvents such as water during the emulsion polymerization of the chloroprene-based polymer, or by a concentration step such as vacuum distillation.

The chloroprene-based polymer latex obtained by the method described above may be used as is as the chloroprene-based polymer latex composition, or, further additives may be added and it may be used as the chloroprene-based polymer latex composition.

1.5 Physical Properties of Chloroprene-based Polymer Latex Composition

The chloroprene-based polymer latex composition according to one embodiment of the present invention preferably has an Initial Adhesive Strength 1 of 2.5 $N/cm^2$ or more, and/or an Initial Adhesive Strength 2 of 5.9 $N/cm^2$ or more, measured by the following method for an adhesive composition comprising 25 parts by mass of an acrylic emulsion and 11 parts by mass of a pH adjuster with respect to 100 parts by mass of the chloroprene-based polymer latex composition.

The Initial Adhesive Strength 1 is, for example, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 $N/cm^2$, and may be within a range between any two of the numerical values exemplified here.

The Initial Adhesive Strength 2 is, for example, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, or 8.0 $N/cm^2$, and may be within a range between any two of the numerical values exemplified here.

<Initial Adhesive Strength>

Two pieces of urethane foam (density 30 $kg/m^3$, thickness 20 mm $\times$ length 50 mm $\times$ width 50 mm) are used as adherends, and the adhesive is spray-applied to each adherend at 70 $g/m^2$ under a 23°C atmosphere. After application, the adhesive surfaces of the urethane foams are overlapped while the adhesive is still wet, and the adherend (laminate) with a thickness of 40 mm is compressed to 20 mm and held for 10 seconds. Thereafter, after being left for 1 minute (Initial Adhesive Strength 1) or 15 minutes (Initial Adhesive Strength 2) in a 23°C atmosphere, a tensile test is immediately performed in a direction perpendicular to the adhesive surface using a tensile tester (Tensilon manufactured by A&D Company, Limited; tensile speed 200 mm/min) to measure the adhesive strength.

2. Adhesive Composition

The adhesive composition according to the present invention can comprise the above-described chloroprene-based polymer latex composition.

2.1 pH Adjuster

The adhesive composition according to one embodiment of the present invention can comprise a pH adjuster. By adding the pH adjuster, initial adhesive strength and storage stability can be further improved. As the pH adjuster, weak acids or buffer solutions can be used. Specifically, at least one compound selected from a group consisting of hydroxy acids such as citric acid and glycolic acid, boric acid, and amino acids is preferred, and among these, amino acids are preferred. Examples of amino acids include glycine, alanine, threonine, and proline, with glycine being more preferred from the viewpoints of cost, adhesive performance, ease of handling, and the like.

The adhesive composition according to one embodiment of the present invention preferably contains 1 to 20 parts by mass of the pH adjuster with respect to 100 parts by mass of the solid content of the chloroprene-based polymer latex composition. The content of the pH adjuster is, for example, 1, 2, 3, 4, 5, 6, 7, 8, 9, 10, 11, 12, 13, 14, 15, 16, 17, 18, 19, or 20 parts by mass, and may be within a range between any two of the numerical values exemplified here. The pH adjuster may be used alone or in combination of two or more types.

2.2 Polymer Emulsion

The chloroprene-based polymer latex composition and the adhesive composition according to one embodiment of the present invention can comprise a polymer emulsion (a latex comprising a polymer other than the chloroprene-based polymer).

Examples of the polymer emulsion include one or more selected from the group consisting of acrylic emulsions, urethane emulsions, styrene and butadiene rubber latexes, acrylonitrile and butadiene rubber latexes, natural rubber latexes, and the like, and it is preferable to comprise an acrylic emulsion. The acrylic emulsion can be obtained by (co) polymerizing a (meth)acrylic acid ester, optionally with a monomer serving as a functional group, a monomer serving as a crosslinking group, and/or another copolymerizable monomer.

In the chloroprene-based polymer latex composition and/or the adhesive composition according to one embodiment of the present invention, the content of the polymer emulsion with respect to 100 parts by mass of the solid content is, for example, 0, 5, 10, 15, 20, 25, 30, 35, 40, or 45 parts by mass, and may be within a range between any two of the numerical values exemplified here. The polymer emulsion may be used alone or in combination of two or more types. The adhesive composition according to one embodiment of the present invention, by comprising the polymer emulsion (particularly an acrylic emulsion), can further improve its storage stability and the feel (hardness) of the adhesive layer while maintaining initial adhesive strength.

The adhesive composition according to one embodiment of the present invention can contain known components, and may, for example, further contain a tackifier, an acid acceptor, an antioxidant, a filler, a pigment, a colorant, a wetting agent, an antifoaming agent, a thickener, and the like. The examples of the tackifier include phenolic resins, terpene resins, rosin derivative resins, petroleum hydrocarbons, and the like.

The adhesive composition according to one embodiment of the present invention preferably has an Initial Adhesive Strength 1 measured by the above method of 2.5 N/cm$^2$ or more, and/or an Initial Adhesive Strength 2 of 5.9 N/cm$^2$ or more.

The Initial Adhesive Strength 1 is, for example, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 N/cm$^2$, and may be within a range between any two of the numerical values exemplified here.

The Initial Adhesive Strength 2 is, for example, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, or 8.0 N/cm$^2$, and may be within a range between any two of the numerical values exemplified here.

The adhesive composition according to one embodiment of the present invention can be suitably used as an adhesive, preferably an aqueous adhesive, more preferably a one-component aqueous adhesive. The adhesive composition according to one embodiment of the present invention can be suitably used as a spray-type adhesive, and particularly suitably used as a spray-type adhesive for bonding the adherends described below.

The adhesive composition according to one embodiment of the present invention targets adherends including foams (cellular materials) made of materials such as polyurethane, ethylene-vinyl acetate copolymer, polyethylene, wood, cloth, woven fabrics, and the like. The adhesive composition according to one embodiment of the present invention can be for polyurethane foam, and at least one of the adherends can be polyurethane foam. For example, it is suitable for bonding polyurethane foams to each other, polyurethane foam to wood, and polyurethane foam to cloth, and can be suitably used, for example, for adhesion in the manufacture of furniture including polyurethane foam members, and the like.

EXAMPLES

Hereinafter, the present invention will be described in more detail based on Examples and Comparative Examples, but the present invention is not limited to these Examples.

<Preparation of Chloroprene-based Polymer Latex>

Into a polymerization vessel with an internal volume of 10 L, 100 parts by mass of chloroprene (monomer), 0.1 parts by mass of n-dodecyl mercaptan, 90 parts by mass of pure water, 3.5 parts by mass of Potassium Rosinate A (containing conjugated resin acid, prepared in-house), 0.55 parts by mass of potassium hydroxide, 0.30 parts by mass of the sodium salt of a beta-naphthalene sulfonic acid formalin condensate (product name "Demol N", manufactured by Kao Corporation), and 0.3 parts by mass of NaHSO$_3$ were added. Potassium persulfate as a polymerization initiator and thiourea dioxide as a reducing agent were added, and polymerization was carried out at a polymerization temperature of 10°C under a nitrogen stream. When the polymerization conversion rate reached 83% by mass, phenothiazine as a polymerization terminator was added to stop the polymerization, thereby obtaining a latex before distillation. A nonionic emulsifier, polyoxyethylene styryl phenyl ether (product name "Noigen EA-137", manufactured by DKS Co. Ltd.), was added, and this latex before distillation was subjected to vacuum distillation to remove unreacted monomers, thereby obtaining a distilled Latex A (solid content: 55% by mass) containing a chloroprene-based polymer.

Latexes B to E (solid content 55% by mass) were obtained by performing the same operation as for Latex A, except that the components and conditions shown in Table 1 and Table 2 were used (disproportionated potassium rosinate: product name "RONDIS K-25", manufactured by Arakawa Chemical Industries, Ltd.).

<Content of Conjugated Resin Acid Component and Non-conjugated Resin Acid Component in Rosin Acid Component>

The contents of the conjugated resin acid component and the non-conjugated resin acid component in the aforementioned Potassium Rosinate A were measured. First, the rosin acid was dissolved in the ethanol and toluene azeotropic mixture (ETA solution) specified in JIS K 6229 and subjected to hydrochloric acid treatment to obtain a solution (rosin acid: 1.5% by mass). Gas chromatography was performed on this solution under the following conditions.

[Gas Chromatography Conditions]

Gas chromatograph mass spectrometer: product name "JEOL Jms-Q1050GC", manufactured by JEOL Ltd.

Column used: FFAP 0.32 mm$\varphi$(diameter) $\times$ 25 m (film thickness 0.3 $\mu$m)
Column temperature: 200°C (hold for 90 min) $\rightarrow$250°C
Temperature ramp rate: 10°C/min
Inlet temperature: 270°C
Injection volume: 1 $\mu$L
Interface temperature: 270°C
Ion source temperature: 270°C
Ionization current: 50 $\mu$A
Ionization voltage: 70 eV
Detector voltage: -1000 V
Ionization method: EI method

From the measurement results of the gas chromatography, the peak areas of the respective conjugated resin acid components of abietic acid component (abietic acid and its salts; the same applies to other resin acids), neoabietic acid component, palustric acid component, and levopimaric acid component were determined, and the peak areas of the respective non-conjugated resin acid components of dehydroabietic acid component, pimaric acid component, isopimaric acid component, and dihydroabietic acid component were determined. The area percentage of the peak area of each component relative to the total peak area was regarded as the content of each component, and the contents of the conjugated resin acid component and the non-conjugated resin acid component were measured.

In Potassium Rosinate A, the area percentages of the conjugated resin acid components were abietic acid component 38.5%, neoabietic acid component 1.2%, palustric acid component 2.3%, and levopimaric acid component 2.6%, and the total area of the conjugated resin acid components was 44.6%. The area percentages of the non-conjugated resin acid components were dehydroabietic acid component 33.5%, pimaric acid component 8.0, and dihydroabietic acid component 5.2%, and the total area of the non-conjugated resin acid components was 46.7%.

When gas chromatography was performed similarly on the aforementioned disproportionated potassium rosinate, none of the abietic acid component, neoabietic acid component, palustric acid component, and levopimaric acid component were detected. The area percentages of the non-conjugated resin acid components were as follows: dehydroabietic acid component was 68.8%, pimaric acid component was 0.5%, dihydroabietic acid component was 21.1%, and the total area of the non-conjugated resin acid components was 90.4%.

<Content of Polyoxyethylene Styryl Phenyl Ether with respect to 100 Parts by Mass of Chloroprene-based Polymer>

The $^1$H-NMR spectrum of a sample solution prepared by dissolving 1.0 mg of internal standard substance sodium trimethylsilylpropionate-d4 (TSP-d4) and about 30 mg of polyoxyethylene styryl phenyl ether (product name "Noigen EA-137", manufactured by DKS Co. Ltd.) in 1.0 mL of heavy water was measured using a JNM-ECX-400 (400 MHz, FT type) manufactured by JEOL Ltd. When the chemical shift reference substance was heavy water (4.65 ppm), the peak area $I_{TSP}$ derived from TSP-d4 at -0.50 to 0.50 ppm and the peak area $I_{EA-137}$ derived from polyoxyethylene styryl phenyl ether at 3.00 to 4.00 ppm were obtained.

The unknown $M_{EA-137}/H_{EA-137}$ was calculated from the following relational expression. Here, W represents mass, M represents molecular weight, I represents signal integral value, and H represents signal H count.

$$W_{TSP}/M_{TSP} : W_{EA-137}/M_{EA-137} = I_{TSP}/H_{TSP} : I_{EA-137}/H_{EA-137}$$

The solid content obtained by freeze-drying the above chloroprene-based polymer latex composition was extracted with an ethanol and toluene azeotropic mixture (ETA solution) specified in JIS K 6229, the solid content was removed by filtration to obtain a solution, and then the solvent was removed to obtain a dried solid. At this time, the ratio of the mass of the obtained dried solid substance to the solid content mass of the chloroprene-based polymer latex composition was taken as the ETA extraction rate.

The $^1$H-NMR spectrum of a sample solution prepared by dissolving about 30 mg of the above dried solid and 1.0 mg of TSP-d4 in 1.0 mL of heavy water was measured using a JNM-ECX-400 (400 MHz, FT type) manufactured by JEOL Ltd. When the chemical shift reference substance was heavy water (4.65 ppm), the peak area $I_{TSP}$ derived from TSP at -0.50 to 0.50 ppm and the peak area $I_x$ derived from polyoxyethylene styryl phenyl ether at 3.00 to 4.00 ppm were obtained. The mass $W_x$ of polyoxyethylene styryl phenyl ether contained in the sample solution was calculated from the following relational expression.

$$W_{TSP}/M_{TSP} : W_x/M_{EA-137} = I_{TSP}/H_{TSP} : I_x/H_{EA-137}$$

The ratio C of the mass of polyoxyethylene styryl phenyl ether to the solid content mass of the chloroprene-based polymer latex composition was calculated by the following formula.

$$C\ (\%) = W_x\ (mg) / Mass\ of\ dried\ solid\ (mg) \times 100 \times ETA\ extraction\ rate\ (\%)$$

From the obtained value of C, the parts by mass of polyoxyethylene styryl phenyl ether with respect to 100 parts by mass of chloroprene-based polymer was calculated, and the values in Tables 1 were obtained.

<Nuclear Magnetic Resonance Analysis (1H-NMR) Measurement Conditions>

[0086]

　　　Measurement mode: Non-decoupling
　　　Flip angle: 45 degrees
　　　Waiting time: 4.3 seconds
　　　Sample rotation speed: 12 Hz
　　　Window processing: Exponential function
　　　Number of scans: 32
　　　Measurement temperature: 30°C

<Toluene Insoluble Content>

1 g of the chloroprene-based polymer obtained by freeze-drying the aforementioned chloroprene-based polymer latex was cut into 2 mm squares to obtain test pieces. Those test pieces were placed in a conical beaker and dissolved in 80 g of toluene over 16 hours. Subsequently, after centrifugation, the gel fraction (insoluble fraction) was separated using a 200 mesh metal screen. Thereafter, the gel fraction was dried, and the mass of the dried material was measured. The toluene insoluble content in the chloroprene-based polymer was determined by the following formula, where A g is the mass of the freeze-dried latex, and B g is the mass of the gel fraction (insoluble fraction) separated from the mixture dissolved in toluene.

$$Toluene\ insoluble\ content\ (gel\ fraction) = B/A \times 100\ (\%)$$

The results are shown in Table 1 and 2.

<Average Particle Size>

The aforementioned chloroprene-based polymer latex was diluted and adjusted with distilled water so that the solid content concentration became 0.01% by mass, and the average particle size was determined using an ELSZ Series (manufactured by Otsuka Electronics Co., Ltd.). Here, as the average particle size of the latex, a value determined by the cumulant method from the autocorrelation function determined by the photon correlation method in the dynamic light scattering method was used. The results are shown in Tables 1 and Table 2.

<Freeze Stability (-5°C)>

10 mL of the prepared chloroprene-based polymer latex was placed in a polypropylene test tube with a diameter of 18 mm and a length of 18 cm, and the tube was sealed. This was placed in a desktop low-temperature constant temperature water bath, stored at -5°C, and changes in appearance and viscosity after 1 day were recorded. The test tube was tilted, and samples showing no change in viscosity were rated "A", those showing a slight change in viscosity were rated "B", and those whose liquid surface did not move and solidified were rated "C". The results are shown in Table 1 and Table 2.

<Preparation of Aqueous Adhesive>

To 100 parts by mass of the solid content of the chloroprene-based polymer latex composition obtained above, 25 parts by mass of an acrylic emulsion (product name "Acronal Proof 1299", BASF) and 11 parts by mass of glycine as a pH adjuster were added and stirred using a Three One Motor to prepare an aqueous adhesive. The initial adhesive strength of the obtained aqueous adhesive was measured by the following method, and the measurement results are shown in Table 1 and Table 2.

[Initial Adhesive Strength]

Two pieces of urethane foam (density 30 kg/m$^3$, thickness 20 mm $\times$ length 50 mm $\times$ width 50 mm) were used as adherends, and the adhesive was spray-applied to each adherend at 70 g/m$^2$ under a 23°C atmosphere. After application, the adhesive surfaces of the urethane foams were overlapped while the adhesive was still wet, and the adherend (laminate) with a thickness of 40 mm was compressed to 20 mm and held for 10 seconds. Thereafter, after being left for 1 minute (Initial Adhesive Strength 1) or 15 minutes (Initial Adhesive Strength 2) in a 23°C atmosphere, a tensile test was immediately performed in a direction perpendicular to the adhesive surface using a tensile tester (Tensilon manufactured by A&D Company, Limited; tensile speed 200 mm/min) to measure the adhesive strength.

[Table 1]

| Table 1 | | | | Example | | | | | | | |
|---|---|---|---|---|---|---|---|---|---|---|---|
| | | | | 1 | 2 | 3 | 4 | 5 | 6 | 7 | 8 |
| | Latex No. | | | A | | | | B | | | C |
| production method of chloroprene-based latex | polymerization formulation | chloroprene | parts by mass | 100 | 100 | 100 | 100 | 100 | 100 | 100 | 100 |
| | | dodecyl mercaptan | | 0.1 | 0.1 | 0.1 | 0.1 | 0.1 | 0.1 | 0.1 | 0.1 |
| | | pure water | | 90 | 90 | 90 | 90 | 90 | 90 | 90 | 90 |
| | | potassium rosinate | | 4.95 | 4.95 | 4.95 | 4.95 | 4.95 | 4.95 | 4.95 | - |
| | | disproportionated potassium rosinate | | - | - | - | - | - | - | - | 4.45 |
| | | potassium hydroxide | | 0.55 | 0.55 | 0.55 | 0.55 | 0.55 | 0.55 | 0.55 | 0.55 |
| | | sodium salt of β-naphthalene sulfonic acid formalin condensate | | 0.3 | 0.3 | 0.3 | 0.3 | 0.3 | 0.3 | 0.3 | 0.3 |
| | | $NaHSO_3$ | | 0.3 | 0.3 | 0.3 | 0.3 | 0.3 | 0.3 | 0.3 | 0.3 |
| | | thiourea dioxide | | 0.01 | 0.01 | 0.01 | 0.01 | 0.01 | 0.01 | 0.01 | 0.01 |
| | | polyoxyethylene styryl phenyl ether | | 0.01 | 0.07 | 0.29 | 0.43 | 0.08 | 0.32 | 0.48 | 0.29 |
| | polymerization condition | polymerization temperature | °C | 10 | 10 | 10 | 10 | 10 | 10 | 10 | 10 |
| | | polymerization conversion rate | % | 83 | 83 | 83 | 83 | 75 | 75 | 75 | 83 |
| | | polymerization time | hour | 13 | 13 | 13 | 13 | 13 | 13 | 13 | 4 |
| chloroprene-based latex composition | content | chloroprene-based polymer | parts by mass | 100 | 100 | 100 | 100 | 100 | 100 | 100 | 100 |
| | | polyoxyethylene styryl phenyl ether | parts by mass | 0.01 | 0.06 | 0.24 | 0.36 | 0.06 | 0.24 | 0.36 | 0.24 |
| | toluene insoluble content | | % | 3 | 1 | 1 | 6 | 1 | 4 | 4 | 2 |
| | average particle size | | nm | 132 | 134 | 130 | 134 | 109 | 109 | 109 | 122 |
| | Freeze stability (-5°C) A : no change B : thickening C : solidification | | | B | A | A | A | A | A | A | A |

(continued)

| Table 1 | | | | Example | | | | | | | |
| | | | | 1 | 2 | 3 | 4 | 5 | 6 | 7 | 8 |
|---|---|---|---|---|---|---|---|---|---|---|---|
| adhesive composition | formulation | latex composition | parts by mass | 100 | 100 | 100 | 100 | 100 | 100 | 100 | 100 |
| | | acrylic emulsion | parts by mass | 25 | 25 | 25 | 25 | 25 | 25 | 25 | 25 |
| | | glycine | parts by mass | 11 | 11 | 11 | 11 | 11 | 11 | 11 | 11 |
| | adhesion test results | Initial Adhesive Strength 1 (after 1 minuite) | N/cm$^2$ | 3.7 | 3.7 | 3.2 | 2.8 | 2.9 | 2.8 | 2.6 | 3.4 |
| | | Initial Adhesive Strength 2 (after 15 minuites) | N/cm$^2$ | 7.5 | 7.5 | 6.9 | 6.2 | 6.7 | 6.6 | 6.1 | 7.2 |

[Table 2]

| Table 2 | | | | comparative example | | | | | |
| | | | | 1 | 2 | 3 | 4 | 5 | 6 |
|---|---|---|---|---|---|---|---|---|---|
| production method of chloroprene-based latex | | Latex No. | | D | | | E | A | |
| | polymerization formulation | chloroprene | parts by mass | 100 | 100 | 100 | 100 | 100 | 100 |
| | | dodecyl mercaptan | | 0.1 | 0.1 | 0.1 | 0.1 | 0.1 | 0.1 |
| | | pure water | | 90 | 90 | 90 | 90 | 90 | 90 |
| | | potassium rosinate | | - | - | - | - | 4.95 | 4.95 |
| | | disproportionated potassium rosinate | | 4.45 | 4.45 | 4.45 | 7 | - | - |
| | | potassium hydroxide | | 0.55 | 0.55 | 0.55 | 0.55 | 0.55 | 0.55 |
| | | sodium salt of β-naphthalene sulfonic acid formalin condensate | | 0.3 | 0.3 | 0.3 | 0.3 | 0.3 | 0.3 |
| | | NaHSO$_3$ | | 0.3 | 0.3 | 0.3 | 0.3 | 0.3 | 0.3 |
| | | thiourea dioxide | | 0.01 | 0.01 | 0.01 | 0.01 | 0.01 | 0.01 |
| | | polyoxyethylene styryl phenyl ether | | 0.00 | 0.07 | 0.29 | 0.29 | 0.00 | 0.58 |
| | polymerization condition | polymerization temperature | °C | 10 | 10 | 10 | 10 | 10 | 10 |
| | | polymerization conversion rate | % | 83 | 83 | 83 | 83 | 83 | 83 |
| | | polymerization time | hour | 13 | 13 | 13 | 13 | 13 | 13 |

15

(continued)

| Table 2 | | | | comparative example | | | | | |
|---|---|---|---|---|---|---|---|---|---|
| | | | | 1 | 2 | 3 | 4 | 5 | 6 |
| chloroprene-based latex composition | content | chloroprene-based polymer | parts by mass | 100 | 100 | 100 | 100 | 100 | 100 |
| | | polyoxyethylene styryl phenyl ether | parts by mass | 0 | 0.06 | 0.24 | 0.24 | 0 | 0.48 |
| | toluene insoluble content | | % | 3 | 3 | 4 | 3 | 2 | 3 |
| | average particle size | | nm | 161 | 162 | 164 | 75 | 132 | 130 |
| | Freeze stability (-5°C) A : no change B : thickening C : solidification | | | C | C | A | - | C | A |
| adhesive composition | formulation | latex composition | parts by mass | 100 | 100 | 100 | Not evaluable due to significant thickening. | 100 | 100 |
| | | acrylic emulsion | parts by mass | 25 | 25 | 25 | | 25 | 25 |
| | | glycine | parts by mass | 11 | 11 | 11 | | 11 | 11 |
| | adhesion test results | Initial Adhesive Strength 1 (after 1 minuite) | N/cm$^2$ | 2.9 | 2.8 | 2.4 | | 3.4 | 2.4 |
| | | Initial Adhesive Strength 2 (after 15 minuites) | N/cm$^2$ | 6.8 | 6.6 | 5.7 | | 7.1 | 5.8 |

As is clear from the tables, it was confirmed that the adhesive composition comprising the chloroprene-based polymer latex composition according to the present invention has improved initial adhesive strength, particularly adhesive strength in a wet state, and is suitably used as an adhesive suitable for applications requiring excellent initial adhesive strength and excellent freeze stability, particularly as a spray-type adhesive used for bonding polyurethane foam.

**Claims**

1. A chloroprene-based polymer latex composition comprising a chloroprene-based polymer and a nonionic emulsifier, wherein:

   the chloroprene-based polymer latex composition comprises 0.005 to 0.40 parts by mass of the nonionic emulsifier with respect to 100 parts by mass of the chloroprene-based polymer; and
   the chloroprene-based polymer has an average particle size of 80 to 160 nm and a toluene insoluble content of 30% by mass or less.

2. The chloroprene-based polymer latex composition of Claim 1, wherein the nonionic emulsifier comprises at least one selected from a group consisting of a polyoxyalkylene phenyl ether-based emulsifier, a polyoxyalkylene alkyl ether-based emulsifier, a polyoxyethylene sorbitan fatty acid ester-based emulsifier, a polyoxyethylene sorbitol fatty acid ester-based emulsifier, a sorbitan fatty acid ester-based emulsifier, a glycerin fatty acid ester-based emulsifier, a polyoxyethylene alkylamine-based emulsifier, a polyoxyethylene fatty acid ester-based emulsifier, and an alkyl alkanolamide-based emulsifier.

3. An adhesive composition comprising the chloroprene-based polymer latex composition of Claim 1 or Claim 2.

4. The adhesive composition of Claim 3, comprising a pH adjuster.

5. The adhesive composition of Claim 3, wherein the adhesive composition is for a polyurethane foam.

## INTERNATIONAL SEARCH REPORT

| International application No. |
|---|
| **PCT/JP2023/042359** |

| A. | CLASSIFICATION OF SUBJECT MATTER |
|---|---|

*C08L 11/02*(2006.01)i; *C08F 36/18*(2006.01)i; *C08K 5/00*(2006.01)i; *C09J 111/02*(2006.01)i
FI: C08L11/02; C08F36/18; C08K5/00; C09J111/02

According to International Patent Classification (IPC) or to both national classification and IPC

| B. | FIELDS SEARCHED |
|---|---|

Minimum documentation searched (classification system followed by classification symbols)

C08L1/00-101/14; C08F36/00-36/22; C08K3/00-13/08; C09J1/00-201/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2018/008509 A1 (DENKA CO., LTD.) 11 January 2018 (2018-01-11) claims, examples 1-3, 5-23 | 1-5 |
| X | WO 2016/133190 A1 (DENKA CO., LTD.) 25 August 2016 (2016-08-25) claims, examples 1-3, 5-17 | 1-5 |
| X | WO 2016/133191 A1 (DENKA CO., LTD.) 25 August 2016 (2016-08-25) claims, examples 1-3, 5-21, comparative examples 1 -34 | 1-5 |
| X | JP 2006-045476 A (DENKI KAGAKU KOGYO K.K.) 16 February 2006 (2006-02-16) claims, paragraph [0001], examples 1, 2, comparative example 1 | 1-5 |
| X | JP 2004-059895 A (DENKI KAGAKU KOGYO K.K.) 26 February 2004 (2004-02-26) claims, examples 1-3 | 1-5 |
| A | WO 2013/141170 A1 (SHOWA DENKO K.K.) 26 September 2013 (2013-09-26) claims, examples 1, 2 | 1-5 |
| A | JP 10-053749 A (AICA KOGYO CO., LTD.) 24 February 1998 (1998-02-24) claims, examples 1, 2 | 1-5 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 December 2023** | **09 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/042359**

| Patent document cited in search report | | | Publication date (day/month/year) | Patent family member(s) | | | Publication date (day/month/year) |
|---|---|---|---|---|---|---|---|
| WO | 2018/008509 | A1 | 11 January 2018 | US claims, examples 1-3, 5-23 EP CN | 2019/0309195 3483211 109476877 | A1 A1 A | |
| WO | 2016/133190 | A1 | 25 August 2016 | EP claims, examples 1-3, 5-17 | 3260488 | A1 | |
| WO | 2016/133191 | A1 | 25 August 2016 | TW claims 1-6, examples 1-3, 5-21, comparative examples 1-34 | 201638269 | A | |
| JP | 2006-045476 | A | 16 February 2006 | (Family: none) | | | |
| JP | 2004-059895 | A | 26 February 2004 | (Family: none) | | | |
| WO | 2013/141170 | A1 | 26 September 2013 | US claims, examples 1, 2 | 2015/0057399 | A1 | |
| JP | 10-053749 | A | 24 February 1998 | (Family: none) | | | |

Form PCT/ISA/210 (patent family annex) (January 2015)

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016160295 A